# EUROPÄISCHE PATENTANMELDUNG

(11) **EP 4 484 040 A1**
(43) Veröffentlichungstag der Anmeldung: **01.01.2025**
(21) Anmeldenummer: 23182377.4
(22) Anmeldetag: 29.06.2023
(51) Int. Cl.: B23D 47/12, B23D 59/00, B25F 5/00

(54) **STEINBEARBEITUNGSMASCHINE UND VERFAHREN ZUM BETREIBEN EINER STEINBEARBEITUNGSMASCHINE**

(71) Anmelder: Mafell AG, 78727 Oberndorf a.N. (DE)
(72) Erfinder: HÄHNLE, Oliver, 72461 Albstadt (DE); MAIER, Andreas, 78737 Fluorn-Winzeln (DE); SCHMID, Harald, 78576 Emmingen (DE); TRABI, Dustin, 72275 Alpirsbach (DE)
(74) Vertreter: Manitz Finsterwald Patent- und Rechtsanwaltspartnerschaft mbB

(57) **Zusammenfassung**

Eine Steinbearbeitungsmaschine (10) weist ein Werkzeug (11), einen Elektromotor (13) zum Antreiben des Werkzeugs (11), um eine Drehzahl des Werkzeugs (11) einzustellen, und eine Steuereinheit (15) auf. Die Steinbearbeitungsmaschine (10) ist ausgebildet, in einem Leerlaufbetrieb und einem Arbeitsbetrieb betrieben zu werden. Die Steuereinheit (15) ist ausgebildet, den Elektromotor (13) im Leerlaufbetrieb anzusteuern, um die Drehzahl auf eine Leerlaufdrehzahl einzustellen, und den Elektromotor (13) im Arbeitsbetrieb anzusteuern, um die Drehzahl auf eine Nenndrehzahl einzustellen, die größer als die Leerlaufdrehzahl ist.

## Beschreibung

Die Erfindung betrifft eine Steinbearbeitungsmaschine, insbesondere eine Steintrennmaschine, die ein Werkzeug, einen Elektromotor zum Antreiben des Werkzeugs, um eine Drehzahl des Werkzeugs einzustellen, und eine Steuereinheit aufweist. Ferner betrifft die Erfindung ein Verfahren zum Betreiben einer derartigen Steinbearbeitungsmaschine.

Steinbearbeitungsmaschine eignen sich zum Bearbeiten, insbesondere zum Trennen, von Stein oder steinähnlichen Materialien wie Beton. Dabei wird das von dem Elektromotor angetriebene Werkzeug der Steinbearbeitungsmaschine genutzt, um den Stein zu trennen.

Bei derartigen Maschinen entsteht insbesondere zu Beginn der Bearbeitung, nämlich beim Anschnitt des Steins, regelmäßig eine ungewünschte Staubentwicklung. Zudem führt das Bearbeiten von harten Materialien wie Stein oder steinähnlichen Materialien zu nennenswerten Geräuschemissionen, Verschleiß der Maschinenteile und zu einer relativen geringen Standzeit des Werkzeugs.

Es ist eine Aufgabe der vorliegenden Erfindung, die Staubentwicklung, insbesondere beim Anschnitt, die Geräuschemissionen und den Verschleiß der Maschinenteile zu reduzieren und gleichzeitig die Standzeit des Werkzeugs zu erhöhen.

Diese Aufgabe wird durch den Gegenstand der unabhängigen Ansprüche gelöst. Vorteilhafte Weiterbildungen sind Gegenstand der Unteransprüche und in der Beschreibung sowie den Zeichnungen angegeben.

Die erfindungsgemäße Steinbearbeitungsmaschine ist insbesondere eine Steintrennmaschine, die ein Werkzeug, insbesondere ein Sägeblatt, einen Elektromotor zum Antreiben des Werkzeugs, um eine Drehzahl des Werkzeugs einzustellen, und eine Steuereinheit aufweist. Die Steinbearbeitungsmaschine ist ausgebildet, in einem Leerlaufbetrieb und einem Arbeitsbetrieb betrieben zu werden. Die Steuereinheit ist ausgebildet, den Elektromotor im Leerlaufbetrieb anzusteuern, um die Drehzahl auf eine Leerlaufdrehzahl einzustellen, und den Elektromotor im Arbeitsbetrieb anzusteuern, um die Drehzahl auf eine Nenndrehzahl einzustellen, die größer als die Leerlaufdrehzahl ist.

Bei der Bearbeitung von Stein oder steinähnlichen Materialien führt üblicherweise insbesondere der Anschnitt des Steins zu einer störenden, erheblichen Staubentwicklung. Sobald mit dem Werkzeug eine gewisse Schnitttiefe in dem Stein erreicht ist, wird diese Staubentwicklung deutlich reduziert, da der Staub in dem erzeugten Schnittkanal gleichsam von dem Stein abgekapselt wird und nur noch in geringem Umfang aus dem Schnittkanal entweicht. Zudem liegt der Stein üblicherweise auf einem Arbeitstisch der Steinbearbeitungsmaschine auf, wobei regelmäßig von unterhalb des Arbeitstischs durch einen Schlitz eine Staubabsaugung stattfindet. Bei ausreichender Tiefe des Schnittkanals bildet dieser einen Absaugkanal aus, aus dem der Staub zusätzlich abgesaugt werden kann, was die Staubentwicklung weiter reduziert.

Durch die beiden Betriebsarten Leerlaufbetrieb und Arbeitsbetrieb ist es möglich, den Anschnitt des Steins oder steinähnlichen Materials bei reduzierter Drehzahl, nämlich der Leerlaufdrehzahl, durchzuführen. Aufgrund der reduzierten Drehzahl wird die Staubentwicklung maßgeblich reduziert. Außerdem führt die reduzierte Drehzahl zu einer geringeren Geräuschemission und einem geringeren Verschleiß der Maschinenteile. Zudem wird das Werkzeug bei reduzierter Drehzahl weniger abgenutzt, sodass sich die Standzeit erhöht, welche die Zeit angibt, die ein Werkzeug genutzt werden kann, bis es überholt oder ausgetauscht werden muss.

Vorzugsweise ist die Steinbearbeitungsmaschine dazu ausgebildet, aufgrund einer Nutzereingabe von dem Leerlaufbetrieb in den Arbeitsbetrieb zu wechseln. Insbesondere kann die Steinbearbeitungsmaschine eine Lastsensoreinrichtung zum Überwachen einer an dem Werkzeug anliegenden Last aufweisen, wobei die Nutzereingabe eine Erhöhung der an dem Werkzeug anliegenden Last bewirkt.

Die Nutzereingabe kann dabei beispielsweise sein, dass ein Nutzer, wenn er den Anschnitt ausgeführt hat und der Schnittkanal ausreichend tief ist, das Werkstück fester gegen das Werkzeug drückt. Das Werkzeug erfährt dadurch eine höhere Last und einen höheren Widerstand, was von der Lastsensoreinrichtung erkannt wird. Aufgrund der Lasterhöhung erkennt die Steinbearbeitungsmaschine den Wunsch des Nutzers, von dem Leerlaufbetrieb in den Arbeitsbetrieb zu wechseln und die Drehzahl auf die Nenndrehzahl zu erhöhen. Dies ist zum einen für den Nutzer, der seine Hände ohnehin an dem Werkstück hat, leicht handhabbar und bedarf zudem keiner zusätzlichen Schalter an der Maschine. Grundsätzlich sind auch alternative Nutzereingaben möglich, um von dem Leerlaufbetrieb in den Arbeitsbetrieb zu wechseln, wie etwa eine Eingabe über ein Fußpedal, über einen Schalter, eine Sprachsteuerung oder eine Gestensteuerung.

Das Überwachen der an dem Werkzeug anliegenden Last kann grundsätzlich auf unterschiedliche Arten erfolgen. Beispielsweise bietet es sich an, den Eingangsstrom des Elektromotors zu überwachen, das heißt die Lastsensoreinrichtung ist in diesem Fall dazu ausgebildet, den Eingangsstrom des Elektromotors zu messen. In dem oben genannten Beispiel wird die Steinbearbeitungsmaschine zunächst bei konstanter Leerlaufdrehzahl betrieben. Drückt der Nutzer nun das Werkstück fester gegen das Werkzeug, bewirkt dies einen Anstieg des Eingangsstroms bei konstanter Drehzahl bzw. allenfalls einem leichten Drehzahleinbruch. Wenn die Lastsensoreinrichtung diesen Anstieg erkennt, kann daraus eine Erhöhung der an dem Werkzeug anliegenden Last abgeleitet werden.

In vorteilhafter Ausgestaltung ist die Steinbearbeitungsmaschine dazu ausgebildet, von dem Arbeitsbetrieb in den Leerlaufbetrieb zu wechseln, wenn die Lastsensoreinrichtung im Arbeitsbetrieb einen Lastabfall an dem Werkzeug feststellt.

Der Lastabfall kann beispielsweise über einen Abfall des Eingangsstroms des Elektromotors detektiert werden. Dies entspricht dem Zustand, in dem das Werkzeug das Werkstück vollständig bearbeitet oder durchtrennt hat und somit kein äußerer Widerstand und keine äußere Last mehr an dem Werkzeug anliegt. Da der einzelne Bearbeitungsvorgang abgeschlossen ist, kann die Steinbearbeitungsmaschine zu diesem Zeitpunkt in den Leerlaufbetrieb zurück wechseln. Vorzugsweise kann nach dem Feststellen des Lastabfalls an dem Werkzeug ein Timer aktiviert werden und erst nach Ablauf des Timers, also einer vorbestimmten Dauer, in den Leerlaufbetrieb gewechselt werden, sodass die Leistungs- bzw. Drehzahlreduzierung nicht unmittelbar nach dem Lastabfall eingeleitet wird. Für den Anwender wird dadurch ein angenehmeres Empfinden erzeugt, indem der Anwender nicht durch die Leistungsreduzierung überrascht wird.

Vorzugsweise ist die Steinbearbeitungsmaschine dazu ausgebildet, von dem Leerlaufbetrieb in den Arbeitsbetrieb zu wechseln, wenn die Lastsensoreinrichtung im Leerlaufbetrieb einen Lastanstieg an dem Werkzeug feststellt. Dies ist beispielsweise der Fall, wenn im Leerlaufbetrieb der Anschnitt eines ggfs. weiteren Werkstücks durchgeführt wird und der Nutzer, wie zuvor beschrieben, das Werkstück dann fester gegen das Werkzeug drückt, um von dem Leerlaufbetrieb in den Arbeitsbetrieb zu wechseln.

Die Steuereinheit der Steinbearbeitungsmaschine kann dazu ausgebildet sein, zum Reduzieren der Drehzahl des Werkzeugs, insbesondere von der Nenndrehzahl auf die Leerlaufdrehzahl, den Elektromotor anzusteuern, um das Werkzeug elektronisch zu bremsen, etwa über einen generatorischen Betrieb des Elektromotors, oder um das Werkzeug auslaufen zu lassen.

In bevorzugter Ausgestaltung ist die Steinbearbeitungsmaschine ausgebildet, in einem Automatikmodus betrieben zu werden. Die Steuereinheit weist dann eine Regeleinrichtung auf, die ausgebildet ist, den Elektromotor im Automatikmodus anzusteuern, um die Drehzahl des Werkzeugs, insbesondere in Abhängigkeit von einer an dem Werkzeug anliegenden Last, aktiv zu regeln. In dem Automatikmodus wird die Drehzahl folglich nicht konstant gehalten, sondern ist variabel und wird als Funktion der an dem Werkzeug anliegenden Last geregelt. Insbesondere kann die Regeleinrichtung ausgebildet sein, während der Drehzahlregelung eine Arbeitsleistung des Werkzeugs zu begrenzen. Dadurch kann insbesondere die Standzeit des Werkzeugs erhöht werden. Zudem führt die reduzierte Arbeitsleistung zu einer geringeren Staubentwicklung und Geräuschemission.

Insbesondere kann der Automatikmodus optional von dem Nutzer aktivierbar sein, je nachdem, ob dieser eine Begrenzung der Arbeitsleistung zugunsten der höheren Standzeit wünscht.

Die Steuereinheit kann insbesondere ausgebildet sein, im Automatikmodus zur Warnung des Nutzers eine Warnleuchte an der Steinbearbeitungsmaschine zum Leuchten oder Blinken anzusteuern, wenn die Lastsensoreinrichtung erkennt, dass die am Werkzeug anliegende Last einen vorbestimmten Schwellwert übersteigt. Sofern der Nutzer die am Werkzeug anliegende Last sodann nicht reduziert, kann die Regeleinrichtung ausgebildet sein, den Elektromotor anzusteuern, um nach Ablauf einer vorbestimmten Zeitdauer die Drehzahl des Werkzeugs, insbesondere allmählich und stetig, zu reduzieren, vorzugsweise bis zur Leerlaufdrehzahl. Reduziert sich die am Werkzeug anliegende Last danach wieder, etwa weil der Nutzer den Druck verringert, steuert die Regeleinrichtung den Elektromotor an, um die Drehzahl des Werkzeugs wieder zu erhöhen.

Das erfindungsgemäße Verfahren dient zum Betreiben einer Steinbearbeitungsmaschine, insbesondere der zuvor beschriebenen Steinbearbeitungsmaschine, die ein Werkzeug und einen Elektromotor zum Antreiben des Werkzeugs, um eine Drehzahl des Werkzeugs einzustellen, aufweist. Das Verfahren umfasst die folgenden Schritte:
- Ansteuern des Elektromotors in einem Leerlaufbetrieb, um die Drehzahl auf eine Leerlaufdrehzahl einzustellen und
- Ansteuern des Elektromotors in einem Arbeitsbetrieb, um die Drehzahl auf eine Nenndrehzahl einzustellen, die größer als die Leerlaufdrehzahl ist.

Das Verfahren kann zudem umfassen:
- Erkennen einer Nutzereingabe und
- Ändern des Betriebs der Steinbearbeitungsmaschine von dem Leerlaufbetrieb in den Arbeitsbetrieb aufgrund der Nutzereingabe.

Dabei kann die Nutzereingabe insbesondere, wie zuvor ausführlich beschreiben, eine Erhöhung der an dem Werkzeug anliegenden Last bewirken. Das Erkennen der Nutzereingabe erfolgt dann durch das Erkennen der Lasterhöhung, beispielsweise aufgrund einer Erhöhung des Eingangsstroms des Elektromotors.

Bei dem Verfahren kann zudem der Betrieb der Steinbearbeitungsmaschine von dem Arbeitsbetrieb in den Leerlaufbetrieb geändert werden, wenn eine Lastsensoreinrichtung der Steinbearbeitungsmaschine im Arbeitsbetrieb einen Lastabfall an dem Werkzeug feststellt, etwa aufgrund eines Abfalls des Eingangsstroms des Elektromotors.

Es versteht sich, dass die im Zusammenhang mit der erfindungsgemäßen Steinbearbeitungsmaschine beschriebenen Merkmale und Vorteile gleichermaßen für das Verfahren zum Betreiben der Steinbearbeitungsmaschine gelten und umgekehrt.

Nachfolgend wird die Erfindung schematisch und beispielhaft mit Bezug auf ein in den Zeichnungen gezeigtes Ausführungsbeispiel erläutert. Darin zeigt:
- Fig. 1: einen schematischen Aufbau einer Steinbearbeitungsmaschine gemäß einem Ausführungsbeispiel,
- Fig. 2: die Bearbeitung eines Werkstücks mit dem Werkzeug der Steinbearbeitungsmaschine aus Fig. 1 in unterschiedlichen Phasen eines Bearbeitungsvorgangs und
- Fig. 3: ein Diagramm des Verlaufs der Drehzahl des Werkzeugs über der Zeit in dem Bearbeitungsvorgang gemäß Fig. 2.

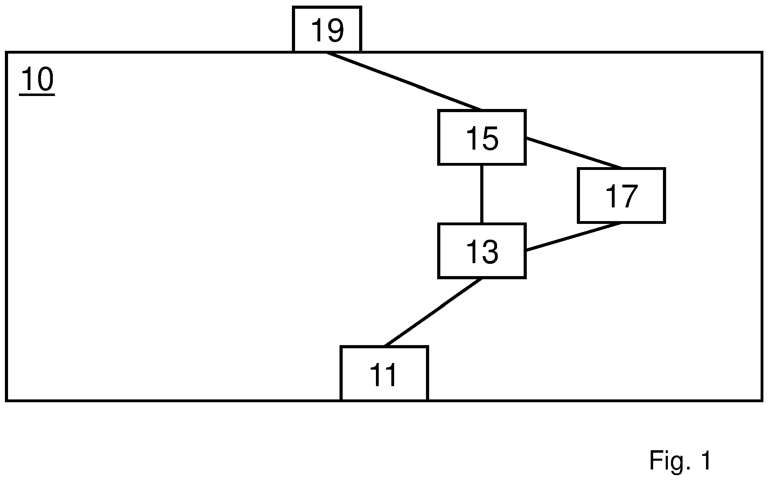

Aus Fig. 1 ist schematisch der Aufbau einer Steinbearbeitungsmaschine 10 ersichtlich, welche als Steintrennmaschine ausgebildet ist. Die Steinbearbeitungsmaschine 10 weist ein Werkzeug 11, nämlich im vorliegenden Beispiel ein Sägeblatt, einen Elektromotor 13, der das Werkzeug 11 antreibt und eine Drehzahl n des Werkzeugs 11 einstellt, eine Steuereinheit 15 und eine Lastsensoreinrichtung 17 auf. Die Lastsensoreinrichtung 17 ist im vorliegenden Ausführungsbeispiel dazu ausgebildet, den Eingangsstrom des Elektromotors 13 zu messen und überwachen. An ihrer Außenseite, beispielsweise ihrem Gehäuse, ist die Steinbearbeitungsmaschine 10 ferner mit einer Warnleuchte 19 versehen, sodass die Warnleuchte 19 für einen Nutzer der Steinbearbeitungsmaschine 10 sichtbar ist.

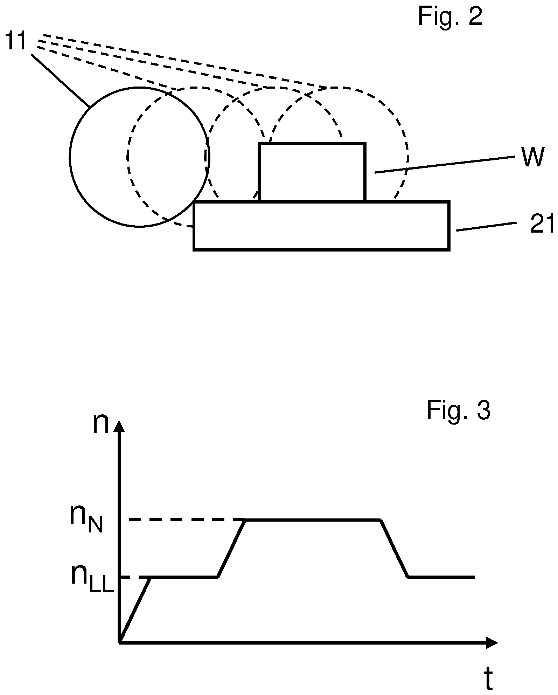

Fig. 2 zeigt einen beispielhaften Verlauf der Bearbeitung eines Werkstücks W aus Stein oder steinähnlichem Material mit dem Werkzeug 11 der Steinbearbeitungsmaschine 10. Zur Bearbeitung liegt das Werkstück W auf einem Arbeitstisch 21 auf. Zu diesem Zweck ist das Werkzeug 11 mit durchgezogener Linie an einer Anfangsposition und mit gestrichelten Linien an drei weiteren Positionen dargestellt, die das Werkzeug 11 im Laufe des Bearbeitungsvorgangs durchläuft.

Ein Verlauf der Drehzahl n des Werkzeugs 11 über der Zeit t während des Bearbeitungsvorgangs ist aus Fig. 3 ersichtlich.

Zu Beginn (t = 0) wird die Bearbeitungsmaschine 10 eingeschaltet, das heißt die Drehzahl n ist zunächst 0 und steigt nach dem Einschalten auf eine Leerlaufdrehzahl n_{LL} an. Die Steinbearbeitungsmaschine 10 wird in einem Leerlaufbetrieb betrieben, in dem die Leerlaufdrehzahl n_{LL} im Wesentlichen konstant gehalten wird, wie Fig. 3 zeigt.

Das Werkzeug 11 wird nun zum Werkstück W gebracht, wobei der untere Teil des Werkzeugs 11 entlang eines nicht dargestellten Schlitzes des Arbeitstischs 21 geführt wird. Der Nutzer führt nun den Anschnitt des Werkstücks W im Leerlaufbetrieb durch, und zwar insbesondere so lange, bis der von dem Werkzeug 11 in das Werkstück W eingebrachte Schnittkanal eine gewisse Tiefe aufweist, sodass Staub in dem erzeugten Schnittkanal gleichsam von dem Stein abgekapselt wird und nur noch in geringem Umfang aus dem Schnittkanal entweicht und zudem der Schnittkanal einen ausreichenden Absaugkanal ausbildet, sodass der noch entstehende Staub von unterhalb des Arbeitstischs 21 mittels einer geeigneten Saugvorrichtung (nicht dargestellt) abgesaugt werden kann.

Wenn der Nutzer nach dem Anschnitt entscheidet, dass die Drehzahl des Werkzeugs 11 erhöht werden soll, drückt er das Werkstück W fester gegen das Werkzeug 11. Aufgrund des Drucks erfährt das Werkzeug 11 einen höheren Widerstand und damit eine höhere Last. Da im Leerlaufbetrieb die Leerlaufdrehzahl n_{LL} dennoch konstant zu halten ist, findet ein Anstieg des Eingangsstroms des Elektromotors 13 statt. Die Lastsensoreinrichtung 17, welche den Eingangsstrom des Elektromotors 13 überwacht, erkennt dies, woraufhin die Bearbeitungsmaschine 10 von dem Leerlaufbetrieb in den Arbeitsbetrieb übergeht. Wie in Fig. 3 gezeigt, wird die Drehzahl n des Werkzeugs 11 von der Leerlaufdrehzahl n_{LL} auf die Nenndrehzahl n_{N} erhöht und wiederum für die Dauer des restlichen Bearbeitungsvorgangs konstant gehalten.

Nach Beendigung des Bearbeitungsvorgangs, also insbesondere wenn das Werkstück W vollständig durchtrennt ist, reduziert sich die am Werkzeug 11 anliegende Last abrupt. Da sich die Bearbeitungsmaschine 10 zu diesem Zeitpunkt im Arbeitsbetrieb befindet, in dem die Leerlaufdrehzahl n_{LL} konstant zu halten ist, findet ein Abfall des Eingangsstroms des Elektromotors 13 statt. Die Lastsensoreinrichtung 17 erkennt dies wiederum, woraufhin die Bearbeitungsmaschine 10, ggfs. nach Ablauf einer vorbestimmten Zeitdauer, von dem Arbeitsbetrieb zurück in den Leerlaufbetrieb übergeht. Die Drehzahlabsenkung von der Nenndrehzahl n_{N} auf die Leerlaufdrehzahl n_{LL} kann dabei beispielsweise durch elektronisches Bremsen etwa über einen generatorischen Betrieb des Elektromotors 13, oder Auslaufen des Werkzeugs 11 geschehen.

Die Bearbeitungsmaschine 10 gemäß dem vorliegenden Ausführungsbeispiel kann zudem wahlweise in einem hier nicht näher dargestellten Automatikmodus betrieben werden. Zu diesem Zweck ist die Steuereinheit 15 mit einer Regeleinrichtung versehen, die den Elektromotor 13 im Automatikmodus ansteuert, um die Drehzahl n auf einen veränderlichen und von der an dem Werkzeug 11 anliegenden Last abhängigen Wert aktiv zu regeln, was in der gesamten Trennphase - also auch bereits während des Anschnitts - geschieht. So kann die Arbeitsleistung zugunsten einer Standzeiterhöhung des Werkzeugs 11 und einer Reduktion der Staub- und Lärmentwicklung aktiv reduziert werden und passend zu der jeweiligen Lastsituation reduziert werden.

Die Steuereinheit 15 steuert im Automatikmodus zur Warnung des Nutzers die Warnleuchte 19 an, damit diese leuchtet oder blinkt, wenn die Lastsensoreinrichtung 17 erkennt, dass die am Werkzeug 11 anliegende Last einen vorbestimmten Schwellwert übersteigt. Sofern der Nutzer die am Werkzeug 11 anliegende Last sodann nicht reduziert, steuert die Regeleinrichtung der Steuereinheit 15 den Elektromotor 13 an, um nach Ablauf einer vorbestimmten Zeitdauer die Drehzahl des Werkzeugs 11 stetig bis auf die Leerlaufdrehzahl n_{LL} zu reduzieren.

### Bezugszeichenliste

- 10: Steinbearbeitungsmaschine
- 11: Werkzeug
- 13: Elektromotor
- 15: Steuereinheit
- 17: Lastsensoreinrichtung
- 19: Warnleuchte
- 21: Arbeitstisch

- n: Drehzahl
- n_{LL}: Leerlaufdrehzahl
- n_{N}: Nenndrehzahl
- t: Zeit
- W: Werkstück

## Patentansprüche

1. Steinbearbeitungsmaschine (10), insbesondere Steintrennmaschine, die
ein Werkzeug (11), insbesondere ein Sägeblatt,
einen Elektromotor (13) zum Antreiben des Werkzeugs (11), um eine Drehzahl (n) des Werkzeugs (11) einzustellen, und
eine Steuereinheit (15) aufweist,
wobei die Steinbearbeitungsmaschine (10) ausgebildet ist, in einem Leerlaufbetrieb und einem Arbeitsbetrieb betrieben zu werden,
und wobei die Steuereinheit (15) ausgebildet ist, den Elektromotor (13) im Leerlaufbetrieb anzusteuern, um die Drehzahl (n) auf eine Leerlaufdrehzahl (n_{LL}) einzustellen, und den Elektromotor (13) im Arbeitsbetrieb anzusteuern, um die Drehzahl (n) auf eine Nenndrehzahl (n_{N}) einzustellen, die größer als die Leerlaufdrehzahl (n_{LL}) ist.

2. Steinbearbeitungsmaschine (10) nach Anspruch 1,
die dazu ausgebildet ist, aufgrund einer Nutzereingabe von dem Leerlaufbetrieb in den Arbeitsbetrieb zu wechseln.

3. Steinbearbeitungsmaschine (10) nach Anspruch 2,
die eine Lastsensoreinrichtung (17) zum Überwachen einer an dem Werkzeug (11) anliegenden Last aufweist, wobei die Nutzereingabe eine Erhöhung der an dem Werkzeug (11) anliegenden Last bewirkt.

4. Steinbearbeitungsmaschine (10) nach einem der vorstehenden Ansprüche, die eine Lastsensoreinrichtung (17) zum Überwachen einer an dem Werkzeug (11) anliegenden Last aufweist, wobei die Steinbearbeitungsmaschine (10) dazu ausgebildet ist, von dem Arbeitsbetrieb in den Leerlaufbetrieb zu wechseln, wenn die Lastsensoreinrichtung (17) im Arbeitsbetrieb einen Lastabfall an dem Werkzeug (11) feststellt.

5. Steinbearbeitungsmaschine (10) nach Anspruch 4,
die dazu ausgebildet, von dem Arbeitsbetrieb in den Leerlaufbetrieb zu wechseln, wenn die Lastsensoreinrichtung (17) im Arbeitsbetrieb einen Lastabfall an dem Werkzeug (11) feststellt und nach Feststellen des Lastabfalls eine vorbestimmte Zeitdauer abgelaufen ist.

6. Steinbearbeitungsmaschine (10) nach einem der Ansprüche 3 bis 5,
die dazu ausgebildet ist, von dem Leerlaufbetrieb in den Arbeitsbetrieb zu wechseln, wenn die Lastsensoreinrichtung (17) im Leerlaufbetrieb einen Lastanstieg an dem Werkzeug (11) feststellt.

7. Steinbearbeitungsmaschine (10) nach einem der vorstehenden Ansprüche, wobei die Steuereinheit (15) ausgebildet ist, zum Reduzieren der Drehzahl (n) des Werkzeugs (11), insbesondere von der Nenndrehzahl (n_{N}) auf die Leerlaufdrehzahl (n_{LL}), den Elektromotor (13) anzusteuern, um das Werkzeug (11) elektronisch zu bremsen oder um das Werkzeug (11) auslaufen zu lassen.

8. Steinbearbeitungsmaschine (10) nach einem der vorstehenden Ansprüche, die eine Lastsensoreinrichtung (17) zum Überwachen einer an dem Werkzeug (11) anliegenden Last aufweist, wobei die Steinbearbeitungsmaschine (10) ausgebildet ist, in einem Automatikmodus betrieben zu werden, und wobei die Steuereinheit (15) eine Regeleinrichtung aufweist, die ausgebildet ist, den Elektromotor (13) im Automatikmodus anzusteuern, um die Drehzahl (n) des Werkzeugs (11), insbesondere in Abhängigkeit von einer an dem Werkzeug (11) anliegenden Last, zu regeln,
wobei die Regeleinrichtung vorzugsweise ausgebildet ist, während der Drehzahlregelung eine Arbeitsleistung des Werkzeugs (11) zu begrenzen.

9. Verfahren zum Betreiben einer Steinbearbeitungsmaschine (10), die ein Werkzeug (11) und einen Elektromotor (13) zum Antreiben des Werkzeugs (11), um eine Drehzahl (n) des Werkzeugs (11) einzustellen, aufweist, umfassend die folgenden Schritte:
- Ansteuern des Elektromotors (13) in einem Leerlaufbetrieb, um die Drehzahl (n) auf eine Leerlaufdrehzahl (n_{LL}) einzustellen und
- Ansteuern des Elektromotors (13) in einem Arbeitsbetrieb, um die Drehzahl (n) auf eine Nenndrehzahl (n_{N}) einzustellen, die größer als die Leerlaufdrehzahl (n_{LL}) ist.

10. Verfahren nach Anspruch 9, umfassend den Schritt:
- Erkennen einer Nutzereingabe und
- Ändern des Betriebs der Steinbearbeitungsmaschine (10) von dem Leerlaufbetrieb in den Arbeitsbetrieb aufgrund der Nutzereingabe.

11. Verfahren nach Anspruch 9 oder 10, umfassend den Schritt:
- Ändern des Betriebs der Steinbearbeitungsmaschine (10) von dem Arbeitsbetrieb in den Leerlaufbetrieb, wenn eine Lastsensoreinrichtung (17) der Steinbearbeitungsmaschine (10) im Arbeitsbetrieb einen Lastabfall an dem Werkzeug (11) feststellt,
wobei vorzugsweise das Ändern des Betriebs von dem Arbeitsbetrieb in den Leerlaufbetrieb erfolgt, wenn nach dem Feststellen des Lastabfalls eine vorbestimmte Zeitdauer abgelaufen ist.

12. Verfahren nach einem der Ansprüche 9 bis 11, umfassend den Schritt:
- Ändern des Betriebs der Steinbearbeitungsmaschine (10) von dem Leerlaufbetrieb in den Arbeitsbetrieb, wenn eine Lastsensoreinrichtung (17) der Steinbearbeitungsmaschine (10) im Leerlaufbetrieb einen Lastanstieg an dem Werkzeug (11) feststellt.

13. Verfahren nach einem der Ansprüche 9 bis 12, umfassend den Schritt:
- Ansteuern des Elektromotors (13) zum Reduzieren der Drehzahl (n) des Werkzeugs (11), um das Werkzeug (11) elektronisch zu bremsen oder um das Werkzeug (11) auslaufen zu lassen.

14. Verfahren nach einem der Ansprüche 9 bis 13, umfassend den Schritt:
- Ansteuern des Elektromotors (13) in einem Automatikmodus der Steinbearbeitungsmaschine (10) mittels einer Regeleinrichtung der Steuereinheit (15), um die Drehzahl (n) des Werkzeugs (11), insbesondere in Abhängigkeit von einer an dem Werkzeug (11) anliegenden Last, zu regeln.

15. Verfahren nach Anspruch 14, umfassend den Schritt:
- Begrenzen einer Arbeitsleistung des Werkzeugs (11) während der Drehzahlregelung mittels der Regeleinrichtung.
